Europäisches Patentamt

(19) European Patent Office

Office européen des brevets

(11) Publication number: **0 185 535 B1**

# EUROPEAN PATENT SPECIFICATION

(45) Date of publication of patent specification: **27.03.91**  (51) Int. Cl.⁵: **F16L  31/00, F16L  41/08**

(21) Application number: **85309145.2**

(22) Date of filing: **16.12.85**

(54) **Improvements in or relating to branched hose.**

(30) Priority: **15.12.84 GB 8431736**
      **07.11.85 GB 8527484**

(43) Date of publication of application:
    **25.06.86 Bulletin  86/26**

(45) Publication of the grant of the patent:
    **27.03.91 Bulletin  91/13**

(84) Designated Contracting States:
    **DE FR IT SE**

(56) References cited:
    **EP-A- 0 088 571**
    **EP-A- 0 132 419**
    **FR-A- 2 518 927**
    **GB-A- 1 300 518**
    **GB-A- 2 138 527**

(73) Proprietor: **DUNLOP LIMITED**
    **Silvertown House Vincent Square**
    **London SW1P 2PL(GB)**

(72) Inventor: **Bunyaga, Semambo**
    **91 Evington Road**
    **Leicester(GB)**

(74) Representative: **Moore, John Hamilton et al**
    **Dunlop Limited Group Patent Department**
    **P.O. Box 504**
    **Erdington Birmingham B24 9QH(GB)**

## Description

This invention is directed to improvements in or relating to branched hose, i e hose comprising a main pipe having one or more branch pipes connected thereto, and to a method of manufacture of branched hose.

Branched hose frequently is used in vehicle cooling systems to connect the main fluid circuit including the radiator and engine cylinder block to secondary fluid circuits such as the heating system. Usually the hose is flexible and made of rubber or other elastomerio material having an embedded textile reinforcement to withstand the operating conditions, typically relatively high fluid temperatures and pressures.

The connection between the flexible main pipe and the branch pipe conventionally is achieved by cutting a hole in the wall of the main pipe, inserting the end of the branch pipe into the hole and securing the two together by means of a moulding operation.

This method has several disadvantages. Thus the end of the branch pipe is exposed to the working fluid which could possibly enter and work its way progressively along any embedded reinforcement to result in delamination of the branch pipe and ultimately failure of the hose. The end of the branch pipe usually protrudes into the bore of the main pipe and consequently thereby restricts the flow of the working fluid through the main pipe. Also for some applications the joint may not have sufficient strength to resist damage by applied forces.

It has been proposed, see for example European Patent Publication EP 88571, to provide a rigid metal insert or connection device, typically of brass, to form a branched hose, but that has the disadvantages of extra cost and weight.

The specification of GB-A-2138527 describes another attempt to mitigate the aforediscussed disadvantages and teaches that use may be made of a rigid connection device in the form of a tubular body having at one end a curved external flange the curvature of which matches the bore of the main pipe. The tubular body is arranged to fit within the bore of the branch pipe and extends through an opening in the wall of the main pipe such that the flange conforms to and contacts a marginal portion of the bore of the main pipe around said opening. In this arrangement the branch pipe is shown as abutting directly against the outer surface of the main pipe with the marginal portion of the main pipe around said opening being gripped between the flange of the connection device and the end of the branch pipe. A surrounding band of encapsulating material interconnects the external surfaces of the main and branch pipes.

In accordance with the present invention there is provided an improved branched hose and method of manufacture of a branched hose in which use is made of a connection device in which the flange thereof is shaped to distort the marginal portion of the opening in the main pipe away from the bore of the main pipe, the flange being of a kind provided, between its distal end and the tubular body, with an annular region of greater wall thickness than said distal end and tubular body. A band of material provided to interconnect the pipes is additionally arranged to contact and thus provide protection for that edge surface of the main pipe which defines the opening in the wall of that pipe.

Use may be made of a connection device of moulded plastics material.

The annular region of a thickness greater than the wall thicknesses of the distal end of the flange and the tubular body preferably is shaped such that the inwardly facing surface lies at a greater acute angle or mean acute angle to the longitudinal axis of the tubular body than the outwardly facing surface.

It is particulary preferred that the connection device be formed of a plastics material, though other materials such as metals may be used. By employing plastics materials, such as nylon, there is achieved a low weight connection device which, by virtue of the relatively thick annular region, has sufficient strength to resist damage by applied forces whether arising during manufacture or subsequent in-service use.

The moulded material may be elastomeric and preferably extends around the branch pipe over a length thereof substantially equal to, but preferably less than, that distance which the tubular body portion of the connection device projects into the branch pipe. The band may be arranged also to extend completely around the main pipe but for a compact construction preferably does not extend completely around said main pipe. In one preferred construction the band of material extends around no more than approximately half the circumference of the main pipe as considered in cross-section of the main pipe in the region of the opening therein.

The moulded material may be a polymeric material, preferably an elastomeric material, of a kind having embedded therein a reinforcement of a plurality of staple fibres whereby the band is rendered substantially inelastic. The reinforcement fibres may be fibres of a textile material such as nylon, polyester, cotton, rayon or cellulose, but fibres of other materials such as Kevlar (registered Trade Mark) or glass may be used. The individual fibres may have a relatively short length, for example in the order of 10 mm or less, and preferably are treated with an appropriate adhesion promoting agent to facilitate adhesion to the embedding polymeric material. Preferably the fibres have a length in the range 3 to 5 mm and a diameter in the range 20 to 30 microns. The fibres may be generally randomly orientated within the polymeric material or may be preferentially orientated, for example in a circumferential direction of a surrounded portion of the branch hose.

Moulding of the mouldable material preferably is undertaken in a manner which causes the material to fully penetrate and occupy any space between the main hose and the branch hose.

The flexible main pipe typically will be of elastomeric material and the branch pipe typically flexible and preferably also of elastomeric material. The main and/or branch pipe may include an embedded reinforcement which may comprise one or more layers of textile material, for example a knitted rayon or polyester sleeve or a ply woven fabric. Alternatively the reinforcement may comprise discontinuous fibres which may be randomly distributed or orientated in a specific direction, e g axially, radially, or circumferentially as described in GB-A-2038437.

Preferably the connection device is moulded in one piece and preferably is formed from settable plastics material, for example nylon 66 (coolant resistant type), although other materials such as thermoplastic plastics may be used provided that they are resistant to the conditions pertaining to the use of the product. For example the material should be resistant to solvent attack when used for automotive applications.

Preferably the connection device is sized so that the diameter of a portion of the tubular body is the same as that of the opening in the main pipe which is therefore not distorted in use, i e is about the same size as it would be in the absence of the connection device. The size of the flange will be such that it may be inserted through the opening in the main pipe by distorting the opening.

The flange may be angled relative to longitudinal axis of the body to provide any desired joint angle between the main and branch pipes.

Preferably the external surface of the body is provided with means, for example one or more annular ribs, to grip the bore of the branch pipe. Additionally or alternatively an adhesive may secure or assist in securing the tubular body in position relative to the branch pipe. Optionally adhesive may be provided to secure the flange of the connection device to the bore of the main pipe.

One embodiment of the invention will now be described, by way of example, with reference to the accompanying diagrammatic drawings wherein:-

Figure 1 shows in cross-section part of a branched elastomeric hose according to the present invention;

Figure 2 is a side view of a connection device for use in a branched elastomeric hose according to the present invention;

Figure 3 is another side view of the connection device shown in Figure 2 in a direction perpendicular to that of the view of Figure 2, and

Figure 4 is a plan view of the connection device shown in Figures 2 and 3.

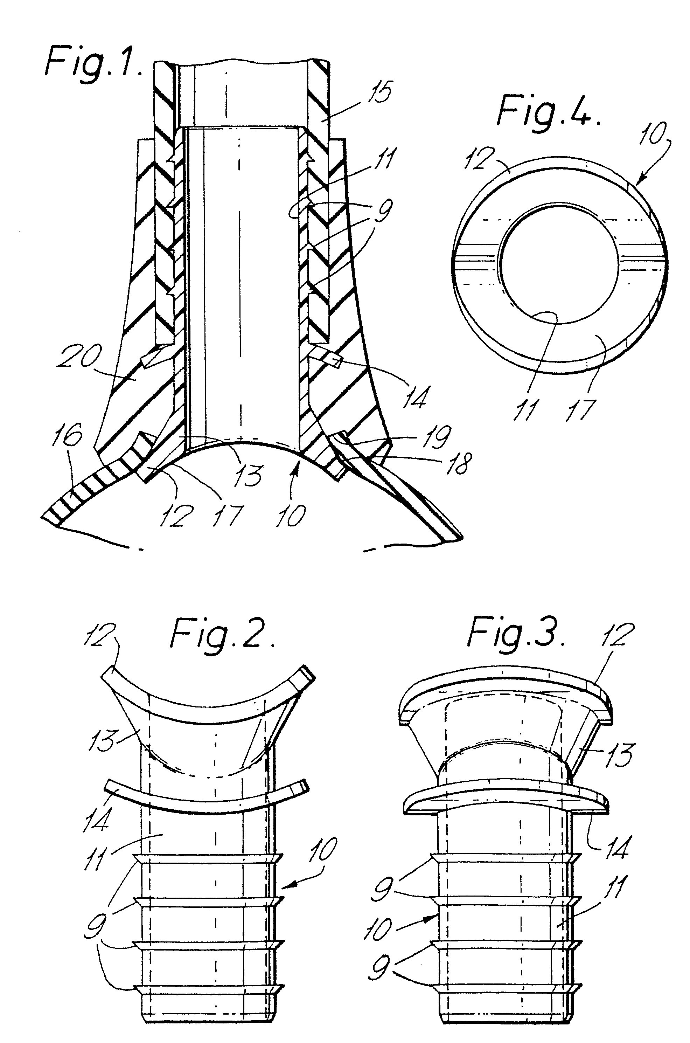

Referring to Figures 1 to 4, a connection device 10 moulded from nylon 66 (coolant resistant type) comprises a cylindrical hollow body 11 having an annular outwardly extending flange 12 at one end. A thickened annular region 13 (see Figure 1) lies between the distal end of the flange and the tubular body 11.

In a region generally remote from the flange the tubular body 11 is provided with four external annular ribs 9 of a serrated configuration arranged for retention of a branch pipe 15 force fitted over the tubular body.

Positioned between the annular ribs 9 and the thickened annular region 13 is an annular abutment 14 which is spaced from the outwardly extending flange 12 by a distance greater than the wall thickness of a main pipe 16 so that it is not in contact with the main pipe when the bore thereof is contacted by the flange 12. The annular abutment 14 is contoured so that the surface of the abutment facing the flange 12 matches the curvature of the outer surface of the main pipe 16.

The external diameter of the annular abutment 14 is selected so as to be sufficient both to provide an abutment against which the branch hose 15 may be force fitted over the serrations 9 and also sufficient to ensure that the abutment 14 and portion of the tubular body remote from the flange 12 will not enter the bore of the main pipe during assembly.

The annular flange 12 has a generally inwardly facing surface 17 the curvature of which conforms generally to the curvature of the bore of the main pipe 16. However, the other, generally outwardly facing surface, 18 of the flange which faces generally towards the annular abutment 14 preferably is angled such that for the annular portion 13 the angle between the surface 18 and the longitudinal axis of the tubular body is less than the angle between the inwardly facing surface 17 and the longitudinal axis for a reason which is explained below.

To manufacture the branched hose assembly shown in Figure 1 an opening 19 is formed in the wall of the main pipe, the diameter of the annular opening being substantially the same as that of the external diameter of that portion of the tubular body between the abutment 14 and flange 12. The flange 12 is inserted through the opening 19 by deforming the wall of the main pipe 16. A branch pipe 15 is then pushed onto the body 11 until the end of the pipe abuts the annular abutment 14. During this operation the annular abutment serves to resist any tendency for the connection device to fall into the main pipe 16.

Subsequent to fitting of the branch hose to the tubular body 11 the connection device is pulled slightly away from the main hose such that the outer surface 18 of the flange 12 contacts the inner surface of the main pipe and causes distortion of the marginal portion of the opening 19. In consequence the cut edge of the main pipe defining the opening is slightly upturned to face in general towards the abutment 14. With the abutment 14 maintained slightly spaced from the main pipe and the main pipe in contact with said surface 18 a band 20 of mouldable uncured rubber is positioned around the joint and subject to a moulding operation whereby it is caused to fill all spaces between the annular abutment 14 and the main and branch pipes and subsequently is cured thereby to interconnect the main and branch pipes and form a fluid seal therebetween.

The use of an annular abutment 14 a surface of which conforms generally to the curvature of the outer surface of the main pipe results in the assembled condition in a substantially uniform spacing between the abutment and main pipe, and thus subsequent to application of the mouldable material 20 there is a uniform filling of that mouldable material between the main pipe and abutment.

By virtue of the use of a connection device of a kind having a thickened annular region the resultant branch hose has a number of advantages. The connection device may be formed of moulded plastics material and thus have a relatively low cost and low weight. The shape of the connection device with its annular thickened region between the distal end of the flange and the tubular body usefully directs the margin defining the opening of the main pipe outwardly from the normal curvature of the main pipe, thus enabling an improved fluid seal to be made with the external band-like fillet of moulded material. The optional annular abutment prevents the connection device from falling into the main pipe.

A further advantage is that the burst pressure of the joint may be increased as compared with that of a branched hose constructed without an insert.

Attention is directed to our EP-A-187010 which describes and claims a branched hose and method of manufacture of a branched hose of a kind incorporating a connection device of a type having a tubular body provided with an abutment which lies between an end of a branch pipe and an opening in the wall of a main pipe.

## Claims

1. A branched hose comprising a flexible main pipe (16) having an opening (19) in the wall thereof, a branch pipe (15) the bore of which is in communication with the bore of the main pipe (16) via said opening, a substantially rigid connection device (10) located in the bore of the main and branch pipes and comprising a tubular body (11) having at least in part an external diameter which locates in the bore of the branch pipe, said tubular body (11) having integral therewith and at one end thereof a flange (12) which extends radially outwardly and axially from the bore of the tubular body, said flange having a generally outwardly facing surface (18) and a generally inwardly facing surface (17) as considered relative to the longitudinal axis of the tubular body and externally of the connection device a band (20) of material moulded to interconnect and seal the pipes (15,16), said connection device (10) being positioned in said main and branch pipes with the tubular body extending through said opening (19) and secured in position relative to the branch pipe (15) with the outwardly facing surface (18) in contact with the surface of the bore of the main pipe surrounding the opening, characterised in that the flange (12) is provided between its distal end and the tubular body with an annular region (13) of greater wall thickness than said distal end and the tubular body, the thickened annular region (13) being in contact with the surface of the bore of the main pipe surrounding said opening, said annular region (13) being shaped to distort the marginal portion of the opening (19) away from the bore of the main pipe, and said external band (20) of material contacting that edge surface of the main pipe which defines the opening in the wall thereof.

2. A branched hose according to claim 1 characterised in that the outwardly facing surface of the tubular body (11) is provided with an annular abutment (14) spaced from the flange.

3. A branched hose according to claim 2 characterised in that the abutment (14) does not extend radially outwardly from the tubular body (11) as far as the flange (12).

4. A branched hose according to claim 2 or claim 3 characterised in that said band (20) of moulded material extends into a space between the abutment and a confronting end surface of the branch pipe (15).

5. A branched hose according to any one of the preceding claims characterised in that the inclination or mean inclination of the inwardly facing surface (17) of the flange (12) to the longitudinal axis of the tubular body (11) is greater than that of an outwardly facing surface (18) of the flange.

6. A branched hose according to any preceding claim characterised in that said band (20) of material extends around the branch pipe (15) over a length thereof substantially equal to the length of the tubular body (11) projecting into the branch pipe.

7. A branched hose according to any preceding claim characterised in that the band (20) of material does not extend wholly around the main pipe (16).

8. A branched hose according to any preceding claim characterised in that the band (20) comprises a fibre reinforced polymeric material.

9. A branched hose according to any preceding claim characterised in that an adhesive secures or assists in securing the tubular body (11) in position relative to the branch pipe (15).

10. A branched hose according to any one of the preceding claims characterised in that at least one of the main and branch pipes (15,16) has a layer of reinforcement material embedded therein.

11. A branched hose according to any one of the preceding claims characterised in that said substantially rigid connection device (10) is formed of a plastics material.

12. A branched hose according to any one of the preceding claims characterised in that said substantially rigid connection device (10) is formed of metal.

13. A method for the manufacture of a branched hose comprising:

providing a flexible main pipe (16) having an opening (19) in the wall thereof;
providing a substantially rigid connection device (10) comprising a tubular body (11) having at least in part an external diameter for location in the bore of a branch pipe (15), said tubular body (11) having integral therewith and at one end thereof a flange (12) which extends radially outwardly and axially from the bore of the tubular body, said flange having a generally outwardly facing surface (18) and a generally inwardly facing surface (17) as considered relative to the longitudinal axis of the tubular body;
providing mouldable material (20) externally of the connection device;
positioning said connection device in said main and branch pipes with the tubular body extending through said opening (19) and secured in position relative to the branch pipe (15) with outwardly facing surface (18) in contact with the bore of the main pipe surrounding the opening, and moulding said mouldable material (20) to form a band of moulded material to interconnect the pipes to form a fluid seal therebetween, characterised in that use is made of a connection device in which between the distal end of said flange and the tubular body there is an annular region (13) of greater wall thickness than said distal end of the flange and the tubular body; inserting the connection device (10) into the main pipe (16) such that the wall of the main pipe lies in contact with the thickened annular region (17);
attaching the branch pipe (15) to the tubular body of the connection device;
drawing the connection device away from the main pipe thereby to distort the marginal portion of the opening (19) away from the bore of the main pipe, and
moulding said mouldable material to contact that edge surface of the main pipe which defines the opening in the wall thereof.

**Revendications**

1. Un tuyau ramifié comprenant une tubulure principale flexible (16) comportant un orifice (19) dans sa paroi, une tubulure dérivée (15) dont l'alésage est en communication avec l'alésage de la tubulure principale (16) par ledit orifice, un dispositif de liaison sensiblement rigide (10) situé dans l'alésage des tubulures principale et dérivée et comprenant un corps tubulaire (11) comportant au moins en partie un diamètre extérieur qui permet de le loger dans l'alésage de la tubulure dérivée, ledit corps tubulaire (11) comportant d'un seul tenant avec lui, à une des extrémités, une bride (12) qui s'étend radialement vers l'extérieur et axialement depuis l'alésage du corps tubulaire, ladite bride possédant une surface tournée généralement vers l'extérieur (18) et une surface tournée généralement vers l'intérieur (17), vues par rapport à l'axe longitudinal du corps tubulaire, et à l'extérieur du dispositif de liaison une bande (20) de matière moulée pour relier entre elles et assembler de façon étanche les tubulures (15, 16), ledit dispositif de liaison (10) étant positionné dans lesdites tubulure principale et dérivée, ledit corps tubulaire s'étendant à travers ledit orifice (19) et étant fixé en position par rapport à la tubulure dérivée (15) de manière que sa surface tournée vers l'extérieur (18) soit en contact avec la surface de l'alésage de la tubulure principale entourant l'orifice, caractérisé en ce que la bride (12) comporte entre son extrémité distale et le corps tubulaire une zone annulaire (13) d'épaisseur de paroi plus forte que ladite extrémité distale et que le corps tubulaire, la zone annulaire épaissie (13) étant en contact avec la surface de l'alésage de la tubulure principale entourant ledit orifice, ladite zone annulaire (13) étant formée de façon a' déformer la partie marginale de l'orifice (19) à l'écart de l'alésage de la tubulure principale, et ladite bande extérieure (20) de matière étant en contact avec la surface de bord de la tubulure principale qui définit l'orifice dans sa paroi.

2. Un tuyau ramifié selon la revendication 1 caractérisé en ce que la surface tournée vers l'extérieur du corps tubulaire (11) comporte une butée annulaire (14) espacée de la bride.

3. Un tuyau ramifié selon la revendication 2 caractérisé en ce que la butée (14) ne s'étend pas radialement vers l'extérieur, à partir du corps tubulaire (11), aussi loin que la bride (12).

4. Un tuyau ramifié selon la revendication 2 ou la revendication 3 caractérisé en ce que ladite bande (20) de matière moulée s'étend dans un espace entre la butée et une surface d'extrémité, tournée vers elle, de la tubulure dérivée (15).

5. Un tuyau ramifié selon l'une quelconque des revendications précédentes caractérisé en ce que l'inclinaison ou l'inclinaison moyenne, par rapport à l'axe longitudinal du corps tubulaire, de la surface (17) tournée vers l'intérieur de la bride (12) est supérieure à que celle d'une surface (18) de bride tournée vers l'extérieur.

6. Un tuyau ramifié selon l'une revendication précédente quelconque caractérisé en ce que ladite bande de matière s'étend autour de ladite tubulure dérivée (15) sur une longueur de celle-ci qui est sensiblement égale à la longueur du corps tubulaire (11) en saillie dans la tubulure principale.

7. Un tuyau ramifié selon une revendication précédente quelconque caractérisé en ce que la bande (20) de matière ne s'étend pas totalement autour de la tubulure principale (16).

8. Un tuyau ramifié selon une revendication précédente quelconque caractérisé en ce que la bande (20) comprend une matière de polymère armée de fibres.

9. Un tuyau ramifié selon une revendication précédente quelconque caractérisé en ce qu'un adhésif fixe ou aide à fixer le corps tubulaire (11) en position par rapport à la tubulure dérivée (15).

10. Un tuyau ramifié selon l'une quelconque des revendications précédentes caractérisé en ce que au moins l'une des tubulures, principale et dérivée (15, 16), comporte une couche de matière d'armature qui y est noyée.

11. Un tuyau ramifié selon l'une quelconque des précédentes revendications caractérisé en ce que ledit dispositif de liaison sensiblement rigide (10) est en matière plastique.

12. Un tuyau ramifié selon l'une quelconque des précédentes revendications caractérisé en ce que ledit dispositif de liaison sensiblement rigide (10) est en métal.

13. Un procédé de fabrication d'un tuyau ramifié comprenant les étapes consistant à :
disposer une tubulure flexible principale (16) comportant dans paroi un orifice (19) ;
disposer un dispositif de liaison sensiblement rigide (10) comprenant un corps tubulaire (11) comportant au moins en partie un diamètre extérieur apte à être placé dans l' alésage d' une tubulure dérivée (15), ledit corps tubulaire comportant d'un seul tenant avec lui, à l'une des ses extrémités, une bride (12) qui s'étend radialement vers l'extérieur et axialement à partir de l'alésage du corps tubulaire, ladite bride possédant une surface généralement tournée vers l'extérieur (18) et une surface généralement tournée vers l'intérieur (17), vues par rapport à l'axe longitudinal du corps tubulaire;

disposer une matière de moulage (20) à l'extérieur du dispositif de liaison;

positionner ledit dispositif de liaison dans lesdites tubulures principale et dérivée, le corps tubulaire traversant ledit orifice (19) et étant fixé en position par rapport à ladite tubulure dérivée (15) de manière que sa surface tournée vers l'extérieur (18) soit en contact avec l'alésage de la tubulure principale entourant l'orifice, et en moulant ladite matière de moulage (20) pour former une bande de matière moulée pour relier entre elles les tubulures pour former entre elles un joint étanche,

caractérisé en ce qu'est utilisé un dispositif de liaison dans lequel, entre l'extrémité distale de ladite prise et le corps tubulaire il existe une zone annulaire (13) d'épaisseur de paroi plus forte que ladite extrémité distale de la bride et que le corps tubulaire;

insérer le dispositif de liaison (10) dans la tubulure principale (7) de manière que la paroi de ladite tubulure principale repose en contact avec la zone annulaire épaissie (17);

attacher la tubulure dérivée (15) au corps tubulaire du dispositif de liaison;

tirer le dispositif de liaison à l'écart de la tubulure principale pour déformer la partie marginale de l'orifice (19) à l'écart de l'alésage de la tubulure principale, et

mouler ladite matière de moulage pour venir en contact avec la surface de bord de la tubulure principale qui définit l'orifice dans sa paroi.

**Ansprüche**

1. Schlauchabzweigung umfassend: ein flexibles Hauptrohr (16), das in seiner Wand eine Öffnung (19) hat,

ein Verzweigungsrohr (15), dessen Innenraum über diese Öffnung mit dem Innenraum des Hauptrohres (16) verbunden ist,

ein im wesentlichen starres Verbindungsstück (10), das im Innenraum des Hauptrohres und des Verzweigungsrohres angeordnet ist und einen röhrenförmigen Körper (11) umfaßt, der zumindest teilweise einen Außendurchmesser hat, der in dem Innenraum des Verzweigungsrohres angeordnet ist, wobei der röhrenförmige Körper (11) einstückig an einem Ende einen Flansch (12) aufweist, der sich radial nach außen und axial vom Innenraum des röhrenförmigen Körpers erstreckt, wobei der Flansch, relativ zur Längsachse des röhrenförmigen Körpers betrachtet, eine im allgemeinen nach außen gerichtete Oberfläche (18) und eine im allgemeinen nach innen gerichtete Oberfläche (17) hat, und außerhalb des Verbindungsstückes einen Bund (20) aus einem Material hat, das zum Verbinden und Abdichten der Rohre (15,16) geformt ist, wobei das Verbindungsstück (10) in dem Haupt- und Verzweigungsrohr angeordnet ist, mit dem ringförmigen Körper durch die Öffnung (19) ragend und in einer Stellung relativ zu dem Verzweigungsrohr (15) mit der nach außen gerichteten Oberfläche (18) in Kontakt mit der Oberfläche des Innenraums des Hauptrohres, das die Öffnung umgibt, befestigt ist, **dadurch gekennzeichnet,**

daß der Flansch (12) zwischen seinem äußeren Ende und dem röhrenförmigen Körper mit einem ringförmigen Bereich (13) größerer Wandstärke als am äußeren Ende und am röhrenförmigen Körper versehen ist, wobei der verdickte ringförmige Bereich (13) in Kontakt mit der Oberfläche des Innenraums des Hauptrohres, das die Öffnung umgibt, steht, wobei der ringförmige Bereich (13) so geformt ist, daß er den Randbereich der Öffnung (19) vom Innenraum des Hauptrohres wegbiegt, und der äußere Materialbund (20) diese Randfläche des Hauptrohres berührt, die die Öffnung in der Wand bildet.

2. Schlauchabzweigung nach Anspruch 1, dadurch gekennzeichnet,
daß die nach außen gerichtete Oberfläche des röhrenförmigen Körpers (11) mit einer ringförmigen Auflage (14) versehen ist, die vom Flansch beabstandet ist.

3. Schlauchabzweigung nach Anspruch 2, dadurch gekennzeichnet,
daß die Auflage (14) sich nicht so weit wie der Flansch (12) radial nach außen vom röhrenförmigen Körper (11) erstreckt.

4. Schlauchabzweigung nach Anspruch 2 oder 3, dadurch gekennzeichnet,
daß der Bund (20) aus geformtem Material sich in einen Raum zwischen der Auflage und einer gegenüberliegenden Endfläche des Verzweigungsrohres (15) erstreckt.

5. Schlauchabzweigung nach einem der vorhergehenden
Ansprüche,

dadurch gekennzeichnet,
daß die Neigung oder die mittlere Neigung der nach innen gerichteten Oberfläche (17) des Flansches (12) zur Längsachse des röhrenförmigen Körpers (11) größer ist als die Neigung einer nach außen gerichteten Oberfläche (18) des Flansches.

6. Schlauchabzweigung nach einem der vorhergehenden Ansprüche, dadurch gekennzeichnet, daß der Materialbund (20) sich um das Verzweigungsrohr (15) über eine Länge erstreckt, die im wesentlichen gleich zu der Länge des röhrenförmigen Körpers (11) ist, mit der er in das Verzweigungsrohr ragt.

7. Schlauchabzweigung nach einem der vorhergehenden Ansprüche, dadurch gekennzeichnet, daß der Materialbund (20) sich nicht völlig um das Hauptrohr (16) erstreckt.

8. Schlauchabzweigung nach einem der vorhergehenden Ansprüche, dadurch gekennzeichnet, daß der Bund (20) ein faserverstärktes polymeres Material umfaßt.

9. Schlauchabzweigung nach einem der vorhergehenden Ansprüche, dadurch gekennzeichnet, daß ein Haftmittel den röhrenförmigen Körper (11) in der Stellung relativ zu dem Verzweigungsrohr (15) befestigt oder in der Befestigung unterstützt.

10. Schlauchabzweigung nach einem der vorhergehenden Ansprüche, dadurch gekennzeichnet, daß mindestens eines der Haupt- und Verzweigungsrohre (15,16) darin eine Lage von Verstärkungsmaterial eingebettet hat.

11. Schlauchabzweigung nach einem der vorhergehenden Ansprüche, dadurch gekennzeichnet, daß das im wesentlichen starre Verbindungsstück (10) aus Kunststoff gebildet ist.

12. Schlauchabzweigung nach einem der vorhergehenden

Ansprüche, dadurch gekennzeichnet, daß das im wesentlichen starre Verbindungsstück (10) aus Metall gebildet ist.

13. Verfahren zur Herstellung einer Schlauchabzweigung umfassend:
das Vorsehen eines biegsamen Hauptrohres (16), das eine Öffnung (19) in seiner Wand hat;
das Vorsehen eines im wesentlichen starren Verbindungsstückes (10), das einen röhrenförmigen Körper (11) umfaßt, der zumindest teilweise einen Außendurchmesser hat, der in den Innenraum eines Verzweigungsrohres (15) angeordnet ist, wobei der röhrenförmige Körper (11) einstückig damit ausgebildet und and einem Ende daran einen Flansch (12) aufweist, der sich radial nach außen und axial vom Innenraum des röhrenförmigen Körpers erstreckt, wobei der Flansch, relativ von der Längsachse des röhrenförmigen Körpers aus betrachtet, eine im allgemeinen nach außen gerichtete Oberfläche (18) und eine im allgemeinen nach innen gerichtete Oberfläche (17) hat,
das Vorsehen eines formbaren Materials (20) außerhalb des Verbindungsstückes;
das Anordnen des Verbindungsstückes in dem Haupt- und Verzweigungsrohr, wobei der röhrenförmige Körper durch die Öffnung (19) ragt und in der Anordnung bezüglich des Verzweigungsrohres (15) befestigt ist, wobei die nach außen gerichtete Oberfläche (18) in Kontakt mit dem Innenraum des Hauptrohres ist das die Öffnung umgibt, und
das Formen des formbaren Materials (20) zum Bilden eines Bundes aus formbarem Material, zum Verbinden der Rohre, um dazwischen eine Fluiddichtung zu bilden gekennzeichnet durch
den Gebrauch eines Verbindungsstückes, in dem es zwischen dem äußeren Ende des Flansches und dem röhrenförmigen Körper einen ringförmigen Bereich (13) gibt, der eine größere Wandstärke hat als das äußere Ende des Flansches und der röhrenförmige Körper; das Einfügen des Verbindungsstückes (10) in das Hauptrohr (16), so daß die Wand des Hauptrohres in Kontakt mit dem verstärkten verdickten Bereich (13) liegt;
das Anfügen des Verzweigungsrohres (15) an den röhrenförmigen Körper des Verbindungsstückes;
das Herausziehen des Verbindungsstückes aus dem Hauptrohr, um dabei den Randabschnitt der Öffnung (19) vom Innenraum des Hauptrohres wegzubiegen, und

das Formen des formbaren Materials, um diese Randfläche des Hauptrohres zu berühren, die die Öffnung in der Wand bildet.

Fig.1.

Fig.4.

Fig.2.

Fig.3.